# EUROPEAN PATENT APPLICATION

(11) **EP 4 752 037 A1**
(43) Date of publication of application: **03.06.2026**
(21) Application number: 25219145.7
(22) Date of filing: 27.11.2025
(51) Int. Cl.: B62D 5/30, B62D 5/07, B60K 17/10

(54) **STEERING SYSTEM FOR AN AGRICULTURAL OR WORK VEHICLE**

(30) Priority: 27.11.2024 IT 202400026787
(71) Applicant: CNH Industrial Italia S.p.A., 10156 Torino (IT)
(72) Inventor: Garramone, Adriano, 10156 Turin (IT); Liberti, Stefano, 10156 Turin (IT); Gravili, Andrea, 10156 Turin (IT)
(74) Representative: CNH Industrial IP Department

(57) **Abstract**

Agricultural or work vehicle comprising a hydraulic steering system (SS), at least one hydraulic working tool (HU) and a first hydraulic pump (P) for supplying the steering system by means of a hydraulic supply line (SL) and the at least one hydraulic working member, a hydrostat (HY) comprising a second hydraulic pump (HP) and a hydraulic motor (MP) operatively connected to at least one vehicle wheel (W), wherein the second hydraulic pump and the hydraulic motor are interconnected by means of a pair of hydraulic lines (F, R) and comprising a switching valve (SWV) arranged to connect said pair of hydraulic lines with said steering system in place of said first hydraulic pump, in conditions of failure of the first hydraulic pump.

## Description

### Field of the invention

The present invention relates to a steering system for a work or agricultural vehicle equipped with a propulsion system based on a hydrostat.

### State of the art

Conventional hydraulic power steering systems generally include a steering gear having a hydraulic motor powered by a first hydraulic pump that draws hydraulic fluid from a fluid reservoir and is typically driven by the engine or, indirectly, the vehicle transmission gearings.

The steering wheel is connected to a rotary control valve that directs hydraulic fluid to the hydraulic motor in response to a clockwise or counterclockwise rotation of the steering wheel. The hydraulic motor is operatively connected to the steering linkages of the vehicle wheels to cause a turn.

Generally, the hydraulic oil pumped by the first hydraulic pump is sent to a priority valve that has the task of mainly satisfying the requests of the steering system and sending the residual flow to other working tool s such as an arm or a hydraulic lift, etc..

In work or agricultural vehicles, the steering system was considered intrinsically safe, as it was based on a gerotor and therefore, in emergency conditions, i.e. in the absence of oil coming from the hydraulic pump, the oil is pumped by the action of the operator on the steering wheel. Evidently, the effort to operate the steering wheel is significantly increased and the steering is significantly slower.

The latest regulations require the implementation of additional auxiliary means beyond the gerotor.

In a vehicle in which the main pump that supplies the hydraulic circuit is driven by an internal combustion prime mover, then the regulation leads to the implementation of a second pump, driven by the prime mover, which also involves a significant increase in the costs and weight of the vehicle.

Work or agricultural vehicles equipped with an internal combustion prime mover, the transmission to transfer the motion of the prime mover to the wheels is hydraulic. Generally, the transmission defines a series configuration, in which the internal combustion prime mover drives a second variable displacement hydraulic pump, which, in turn, drives a hydraulic motor, which can have either a fixed or variable displacement.

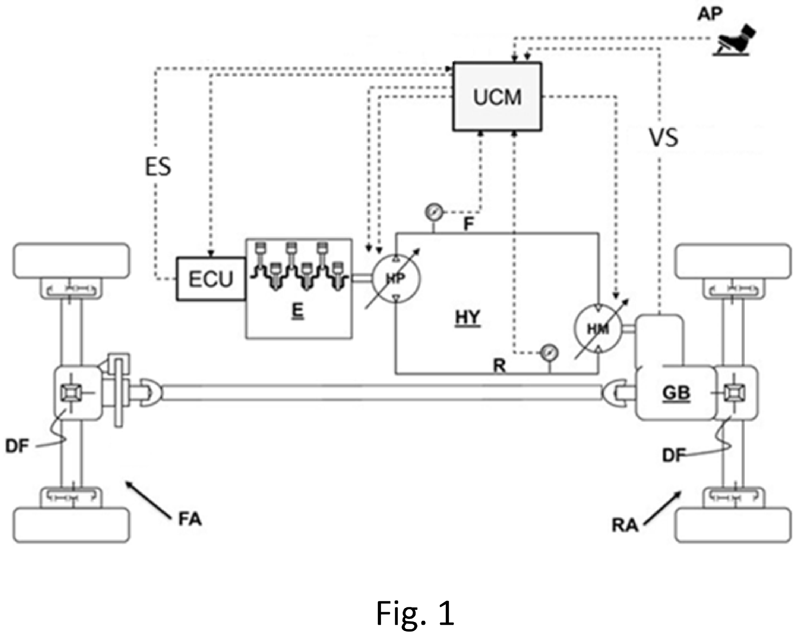

Figure 1 of the prior art shows an example of a hydrostatic transmission of an agricultural or work vehicle.

The second hydraulic pump HP, with variable displacement, and the hydraulic motor HM are interconnected in a known manner to form a hydrostat HY, by means of a so-called high pressure hydraulic line F or "forward" line and a low-pressure hydraulic line R or "return" of the hydraulic oil to the hydraulic pump.

A processing unit UCM is responsible for monitoring the operation of the hydrostat and receives as input a signal of the position of an accelerator pedal AP and a signal of the vehicle speed VS.

The second hydraulic pump is driven in rotation by the prime mover E, controlled by a processing unit ECU configured to receive as input a control signal from the processing unit UCM and to send to the processing unit UCM a signal of the rotation speed of the prime mover ES.

Between the hydraulic motor and the wheels there is often, but not always, a gearbox GB with discrete ratios. Very often there are just two ratios, to facilitate the autonomous movement of the vehicle from one place to another work site.

The motion is generally transmitted to the vehicle wheels by means of a differential. Furthermore, the transmission can be four-wheel drive, therefore, a front differential DF is identified associated with the front axle FA and a rear differential DF associated with the rear axle RA.

Generally, the rotation speed of the prime mover is directly proportional to the position of the accelerator lever and the displacement of the second hydraulic pump is proportional to the rotation speed of the prime mover according to a predetermined mapping, while the displacement of the hydraulic motor is inversely proportional to the speed of the vehicle.

Therefore, a higher speed of the vehicle is a consequence of a higher rotation speed of the prime mover.

Unless specifically excluded in the detailed description that follows, the description in this chapter is to be considered as an integral part of the detailed description.

### Summary of the invention

The purpose of the present invention is to indicate a hydraulic steering system that allows to satisfy the standards while containing production costs and weight of the vehicle.

The basic idea of the present invention is to, in emergency conditions, bypass the first hydraulic pump by connecting the steering system with the hydrostat and in particular with both hydraulic lines of the hydrostat through respective non-return valves.

In other words a switching valve is arranged to connect the hydraulic lines with the steering system in place of the first hydraulic pump.

Advantageously, as long as the vehicle is in motion, the hydraulic pressure on one of the hydraulic lines of the hydrostat is sufficient to power the steering system, ensuring maneuverability of the vehicle, until it stops.

Preferably, a pressure sensor is arranged to measure a pressure value in the hydraulic circuit between the first hydraulic pump and the steering system and identify the aforementioned emergency condition.

Preferably, the present steering system includes a closed-center hydraulic circuit.

The dependent claims describe preferred variants of the invention, forming an integral part of the present description.

### Brief description of the figures

Further objects and advantages of the present invention will be apparent from the following detailed description of an embodiment thereof (and variations thereof) and the accompanying drawings given purely for explanatory and non-limiting purposes, in which:
Figure 1 shows an exemplary electro-hydraulic diagram of a prior art transmission implemented in the present invention;
Figure 2 shows a hydraulic circuit comprising the transmission of Figure 1 and a combined hydraulic steering system according to the present invention.

The configuration of the hydrostat shown in Figure 1 is not to be considered limiting.

It should also be noted that the terms "first", "second", "third", "upper", "lower" and the like may be used herein to distinguish various elements. These terms do not imply a spatial, sequential or hierarchical order for the modified elements unless specifically indicated or inferred from the text.

The elements and features illustrated in the various preferred embodiments, including the drawings, may be combined with each other without departing from the scope of protection of this application as described below.

### Detailed description

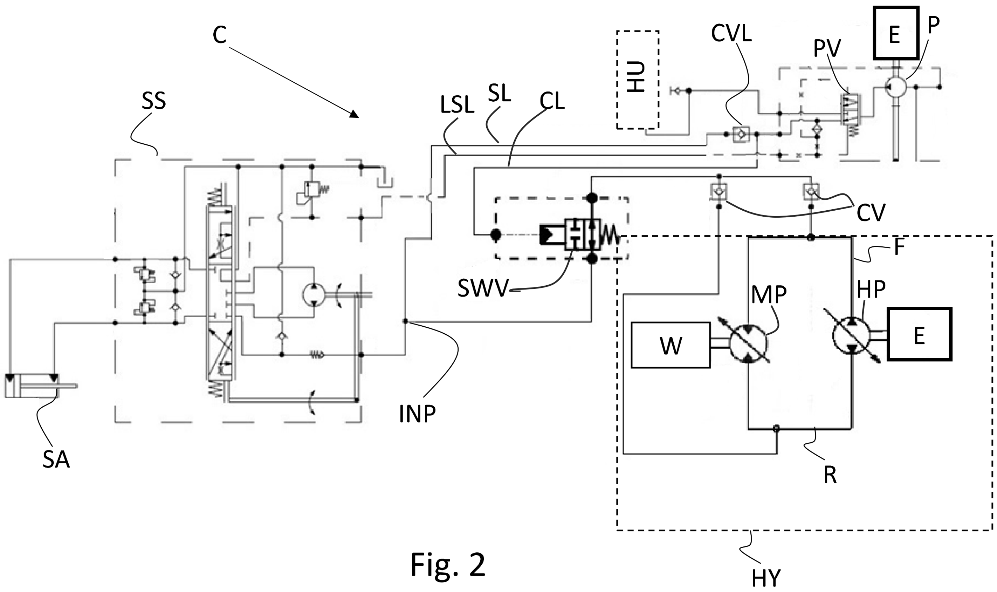

Figure 2 shows a diagram of a hydraulic circuit C modified according to the present invention.

The circuit C essentially comprises:
- A hydraulic steering system SS, known in itself, which controls the hydraulic working tool SA arranged to control the steering levers (not shown) connected to the wheels W of a vehicle axle, see figure 1;
- The ordinary power supply group, which comprises the first hydraulic pump P, suitable for being driven by the prime mover E, which supplies a priority valve PV, which is configured to distribute the flow of hydraulic oil, generated by the first pump, between the steering system SS and at least one further hydraulic user HU, such as an articulated arm, a hydraulic lift, etc..
- A hydrostat HY operatively connected to vehicle wheels W to allow the vehicle to be propelled, comprising a second hydraulic pump HP, connected to the prime mover E to be driven in rotation, operatively connected to the hydraulic motor MP by means of the hydraulic lines F and R described above.

The priority valve is connected to the supply port INP of the steering system SS by means of a supply line SL. Furthermore, the steering system, the first hydraulic pump and the priority valve are interconnected by means of the sensing line LSL in a manner known in itself, to manage the priority supply of the steering system with respect to the other users HU.

According to the present invention, a switching valve SWV has the task of switching the connection of the supply port INP from the priority valve to the lines F and R of the hydrostat in emergency conditions, i.e. in conditions of malfunction/failure of the first hydraulic pump or of the priority valve.

Preferably, the valve SWV is kept in the rest position by the same pressure generated by the first pump and is calibrated to activate, performing the aforementioned switching, when the pressure generated by the first pump is lower than a predetermined pressure threshold.

For this purpose, a hydraulic connection CL connects the switching valve SWV and a point of the supply line SL.

This solution is completely hydraulic, ensuring high reliability.

Alternatively, the valve SWV can be of the electro-actuated type and a pressure sensor placed on the supply line SL, so that the pressure sensor can force the valve SWV to switch when the measured pressure value is lower than the predetermined pressure threshold.

In any case, the valve SWV is preferably of the ON/OFF type, i.e. it is designed so as to never keep the first pump P in parallel with the hydrostat lines HY.

The valve SWV can be completely hydraulic, i.e. controlled by pressure settings. However, even in this second case, the valve status can be determined, for example, by an electric micro-switch associated with the valve. The electric micro-switch can be operationally connected to the processing unit, so as to determine the failure status of the first hydraulic pump and/or the priority pump.

Both hydrostat lines are connected to the port INP by respective non-return valves CV, so that as long as the transmission is operational, i.e. as long as the vehicle is moving, one of the lines supplies the steering system.

The pressure value in the hydrostat delivery line, when the vehicle is moving, is far higher than the pressure required by the steering system, ensuring that the vehicle can steer safely.

When the vehicle is stationary, which is a condition not contemplated by the safety regulations, the vehicle can still be steered thanks to the presence of the gerotor. According to a preferred aspect of the invention, the processing unit UCM is configured to compensate for the flow of hydraulic oil generated in the hydrostat and sent to the steering system
- By increasing the displacement of the second hydraulic pump HP and/or reducing the displacement of the hydraulic motor MP, when the accelerator pedal AP is pressed,
- By reducing the displacement of the second hydraulic pump HP and/or increasing the displacement of the hydraulic motor MP, when the accelerator pedal AP is released and the vehicle is coasting.

The processing unit can detect the emergency condition by monitoring the switching valve SWV, if it is of the electro-actuated type, or by monitoring the pressure on the SL line, or by means of a micro-switch associated with the fully hydraulic switching valve.

The flow of oil diverted from the hydrostat to the steering system can be calculated based on the intrinsic characteristics of the steering system, or it can be estimated, for example, based on the operating conditions of the same, i.e. by acquiring a change in the rotation angle of the steering column. Generally, an angle sensor is associated with the steering column for other purposes. The signal generated by this sensor can also be used to calculate the flow of hydraulic oil diverted from the hydrostat.

It is worth highlighting that downstream of the priority valve PV, on the SL line, a non-return valve CVL is arranged. This valve prevents, in conditions of failure of the first hydraulic pump P or of the priority valve, the hydraulic flow, generated by the hydrostat, from reaching the priority valve. This implies that the hydrostat is used as a reserve of pressurized hydraulic oil exclusively for the steering system and not also for the hydraulic users HU. Implementation variants to the non-limiting example described are possible, without however departing from the scope of protection of the present invention, including all the equivalent embodiments for a technician in the field, to the content of the claims.

From the description reported above, the technician in the field is able to realize the object of the invention without introducing further construction details.

## Claims

1. Agricultural or work vehicle comprising a hydraulic steering system (SS), at least one hydraulic working tool (HU) and a first hydraulic pump (P) for supplying the steering system by means of a hydraulic supply line (SL) and the at least one hydraulic working tool, a hydrostat (HY) comprising a second hydraulic pump (HP) and a hydraulic motor (MP) operatively connected to at least one vehicle wheel (W), wherein the second hydraulic pump and the hydraulic motor are interconnected by means of a pair of hydraulic lines (F, R), and comprising a switching valve (SWV) arranged to connect said pair of hydraulic lines with said steering system in place of said first hydraulic pump, in conditions of failure of the first hydraulic pump.

2. Vehicle according to claim 1, wherein said switching valve is suitable to be actuate by a pressure signal taken from said hydraulic supply line (SL), by means of a hydraulic connection (CL) between said hydraulic supply line and the switching valve.

3. Vehicle according to claim 1, further comprising a pressure sensor arranged on the hydraulic supply line (SL) and wherein said switching valve is electric and is configured to be actuated in function of an electric signal generated by the pressure sensor.

4. Vehicle according to any of claims 1 - 3, wherein, on each of said pair of hydraulic lines (F, R) a non-return valve (CV) is arranged, so as to allow a flow of hydraulic oil only from the hydrostat towards the steering system.

5. Vehicle according to any of the preceding claims 1 - 4, further comprising a main check valve (CVL) disposed on said supply line, arranged to allow a flow of hydraulic oil only from the priority valve to the steering system.

6. Vehicle according to claim 5, further comprising a priority valve (PV) disposed downstream of said first hydraulic pump (P) for distributing a flow of hydraulic oil generated by the first hydraulic pump between said steering system and the at least one hydraulic working tool (HU).

7. Vehicle according to claim 6, wherein said hydraulic connection (CL) connects said switching valve with said supply line at a point in the supply line between said priority valve and said main check valve.

8. Vehicle according to any of the preceding claims, wherein said first and said second hydraulic pumps are operatively connected to a same prime mover (E) to be driven in rotation.

9. Vehicle according to claim 8, wherein said prime mover (E) is an internal combustion engine.

10. Vehicle according to any of the preceding claims, further comprising processing means (UCM) configured to detect a failure state of the first hydraulic pump and control the hydrostat so as to compensate for the hydraulic flow supplied by the hydrostat to the steering system.

11. Vehicle according to claim 10, wherein, in response to said failure detection, said processing means are configured to
- increase a displacement of a second hydraulic pump (HP) of the hydrostat and/or reduce a displacement of a hydraulic motor (MP) of the hydrostat, when an accelerator pedal (AP) of the vehicle is depressed,
- reduce the displacement of the second hydraulic pump (HP) and/or increase the displacement of the hydraulic motor (MP), when the accelerator pedal (AP) is released and the vehicle coasts.

12. Vehicle according to claim 10 or 11, wherein said processing means are configured to detect said failure state:
- by monitoring the pressure on said hydraulic supply line (SL) through a pressure sensor arranged on said hydraulic supply line and/or
- by acquiring an activation state of said switching valve (SWV) .
